# EUROPEAN PATENT APPLICATION

(11) **EP 2 898 983 A1**
(43) Date of publication of application: **29.07.2015**
(21) Application number: 14004266.4
(22) Date of filing: 17.12.2014
(51) Int. Cl.: B23K 26/14, B23K 26/38

(54) **Gas assisted laser cutting method and gas supply**

(30) Priority: 24.01.2014 EP 14000259
(71) Applicant: Linde Aktiengesellschaft, 80331 München (DE)
(72) Inventor: Scholz, Jürgen, 81379 München (DE); Miklos, Ernst, 85551 Kirchheim (DE); Fieret, Jim, Hook Norton, OX15 5PS (GB)

(57) **Abstract**

The invention relates to a method for gas assisted laser cutting of a metal, metal alloy, plastic material, composite, ceramic or wooden workpiece with laser light of a wavelength between 300 nm and 2500 nm utilising an assist gas essentially consisting of carbon dioxide. Another object of the invention is an assist gas supply system.

## Description

The invention relates to a method for gas assisted laser cutting of a metal, metal alloy, plastic material, composite, ceramic or wooden workpiece with laser light of a wavelength between 300 nm and 2500 nm utilising an assist gas. Another object of the invention is an assist gas supply system.

Methods for laser cutting of metals or metal alloy workpieces, for example made of steel, are well known. Herein, different materials react differently e.g. according to wavelengths of the lasers used. In thermal cutting methods, a workpiece is locally heated and melted. The heated, molten material can then be removed from the cutting area by means of an assist gas jet.

Laser cutting with an inert assist gas is a well established process in industry since the 1980s. The physical cutting process is the so-called melt-shear removal mechanism, where a high speed gas jet blows away molten metal, thus creating a cut. Until around 2010, most lasers used for cutting were so-called CO2 lasers, which are gas discharge lasers in which CO2 gas molecules emit the laser radiation at a wavelength of 10.6 micron. Inert cutting assist gas is almost always nitrogen, although sometimes argon is used (for example with titanium). In the melt-shear removal cutting mechanism, the removal efficiency depends on the speed of the gas flow, and the density. Therefore the required assist gas ideally has to be a heavy gas, as well as non-toxic and available at reasonable cost. This limits the possibilities of inert assist gases.

Carbon dioxide has a molecular weight of 44 g/mol but cannot be used for laser cutting utilising a CO2 laser, because it absorbs the laser beam and therefore does not produce efficient cuts due to plasma formation. Argon has a molecular weight of 40 g/mol but has a cost of up to 6 times that of nitrogen. This leaves nitrogen as the main gas used for laser cutting utilising a CO2 laser as energy source.

Alternatively, solid-state lasers become more and more used for laser cutting. Since around 2010, the laser cutting industry has seen rapidly increasing market penetration from solid-state lasers such as fibre lasers and disc lasers. Solid - state lasers require more cutting assist gas than the CO2 lasers, due to their different beam characteristics, as higher gas pressure and/or larger nozzle diameters are needed.

The present invention aims to offer a better gas assisted laser cutting method.

At a wavelength of around 1 micron, i.e. 1000 nm, most gases have no rotation or vibration bands, and are therefore completely transparent. Even the carbon dioxide molecule which has a very large dipole moment, does not interact even with intense radiation at a wavelength of around 1 micron.

This means that, contrary to CO2 lasers, solid state lasers can use carbon dioxide gas as cutting assist gas, benefitting from the enhanced molecular weight of the CO2 molecule and therefore resulting in improved cutting performance.

This is a novel process, as, again contrary to CO2 lasers, solid-state lasers cannot maintain a plasma in a gas due to the radiation frequency lying above the plasma resonance frequency. Therefore, even at very high solid-state laser power, a plasma will not be produced, hence the carbon dioxide molecules will not dissociate and therefore an unoxidised cut will always be achieved.

A second, equally important benefit of carbon dioxide gas is that, under room temperate, it becomes a liquid under high pressure which is not the case for nitrogen. Liquefied gas always has a much higher density as gas phase even under high pressure, and therefore a cylinder containing liquid carbon dioxide contains approximately 3 times as much gas (in terms of cubic metres when expanded to atmospheric pressure at room temperature) as a equally sized cylinder of high pressure nitrogen. Typical pressure of a cylinder of carbon dioxide is 40 - 50 bar depending on temperature.

This means that carbon dioxide gas not only has superior cutting properties, but also requires less storage space.

Because the carbon dioxide is stored as liquid, almost the entire cylinder content can be usefully employed (i.e. until all the liquid has evaporated, whereas a cylinder filled with compressed nitrogen has to be replaced when the pressure has dropped to around 40-50 bar, wasting up to one-quarter of the entire cylinder content.
Standard carbon dioxide gas cylinders are fitted with a so-called dip-tube, which is a metal tube inside the cylinder reaching down to the bottom such that the carbon dioxide is always withdrawn in liquid form. Were liquid carbon dioxide vented from the cylinder pressure through the laser cutting nozzle, it would expand, and turn into carbon dioxide snow.

However, if no dip tube is used then the carbon dioxide is taken from the gaseous CO2 above the liquid and will remain gaseous as it exits the nozzle, which is a preferred embodiment of the present invention. For this reason, also no additional evaporator is needed.

A specific supply solution for carbon dioxide gas is a cylinder bundle (typically 12-15 cylinders bundled together), and cylinder bundles made of cylinders without dip tubes would therefore be a highly appropriate supply solution.

The present invention is especially advantageous in connection with cutting workpieces with a thickness of more than 4 mm up to multiple cm, e.g. the thickness of steel used in ship building. On the other hand and also to a great advantage, workpieces with a thickness of 4 mm or less can be cut with a comparatively high cutting speed.

The present invention provides a method for gas assisted laser cutting of a metal, metal alloy, plastic material, composite, ceramic or wooden workpiece with laser light of a wavelength between 300 nm and 2500 nm, utilising an assist gas essentially consisting of carbon dioxide.

According to the present invention, gas assisted laser cutting uses a cutting head provided with a cutting laser emitting a laser light of a wavelength between 300 nm and 2500 nm and having an assist gas inlet connected with a mixing device connected with respective assist gas supply (single cylinder or connected gas cylinders or gas cylinder bundles or bulk tank(s)).

Advantageously, solid state lasers, such as disc lasers, fibre lasers or diode lasers are used to provide laser light with the claimed wavelength. The term "solid state laser" shall comprise all mentioned types of lasers as well as similar lasers.

Concerning the purity of the used carbon dioxide it is stated, that a minimum content of 99.5 vol.% of carbon dioxide (2.5 purity), and the rest impurities or contaminants, is favourable for use with the present invention. A higher purity is also favourable.

In this respect "essentially" aims to express, that there occur or can occur impurities in this technically used gases. For example carbon dioxide often or almost always contains traces of water and other atmospheric gases. Technically used, and sometimes called "technically pure" gases always contain some trace contaminants of the manufacturing process.

According to a preferred embodiment, the laser light has a wavelength between 500 nm and 1500 nm, preferred between 800 nm and 1200 nm. For example, there are diode pumped alkali laser having a wavelength of 670 nm, Nd:YAG laser having a wavelength of 805 nm, diode pumped solid-state and fiber lasers having a wavelength of 808 nm, 810 nm, 880 nm, 915 nm, 940 nm, 968 nm, 976 nm, 980 nm, 1064 nm (for example, solid-state laser is a class of laser with several representatives). For use in the field of material processing (welding, soldering, cutting) the following wavelengths are preferred: 810 nm, 940 nm, 980 nm, 1940 nm. And according to the present invention, gas assisted laser cutting is performed with a very advantageous wavelength between 1000 and 1100 nm, e.g. 1064 nm.

According to a preferred embodiment, the assist gas is provided at a cutting area of the workpiece by means of a nozzle. This nozzle is preferably designed as a standard, simple nozzle.

Other types of nozzles are also conceivable.

The gas providing devices can be controlled by a control device. In addition, gas leackage sensors and gas warning devices can be implemented into the present invention in order to improve savety, especially when handling CO2 in large amounts as an assist gas for laser cutting.

Advantageously, the provided assist gas is taken from one or more single gas cylinders and/or connected gas cylinders and/or gas cylinder bundles. Each gas cylinder bundle comprising several gas cylinders bundled together normally on a bundle platform. Connected gas cylinders are commonly known as connected in a row.

According to a preferred embodiment, carbon dioxide as assist gas is taken from a single gas cylinder and/or connected gas cylinders and/or a gas cylinder bundle having modified outlet provisions compared to a standard gas cylinder used for the storage and supply of carbon dioxide, where no dip tube is provided inside the gas cylinder(s). This design ensures a gaseous supply out of the cylinder containing gaseous and liquid carbon dioxide.

Another object of the present invention is an assist gas for gas assisted laser cutting using a laser light with a wavelength between 300 nm and 2500 nm, essentially consisting of carbon dioxide. It has been found surprinsingly advantageous to use pure carbon dioxide, especially with a purity of 2.5, i.e. 99.5 vol.% carbon dioxide, with a gas assisted laser cutting process using a solid-state laser, especially a fiber laser. One of the reasons seems to be the absence of a plasma and no resonance of the CO2 molecule at the range of wavelength used between 300 nm and 2500 nm. This is contrary to the behaviour of the assist gas useable for known laser cutting methods, where CO2 lasers are commonly used.

Another object of the present invention is an assist gas supply system comprising said one or more single gas cylinders and/or connected gas cylinders and/or gas cylinder bundles, each comprising several gas cylinders bundled together, and/or comprising one or more bulk tank(s), used for supplying the assist gas to a gas assisted laser cutting device able to perform the laser cutting method according to any of claims 1 to 6.

The gas cylinders for storage and supply of CO2 have a constant pressure about 51 bar. The pressure remains constant for carbon dioxide inside, because there is liquid carbon dioxide in the tank and a gaseous phase above the liquid.

There are two options for bulk tanks available: First, a high pressure tank having a pressure of more than 50 bar and normally a spherical shape. Second, there are low pressure tanks being vacuum insulated and need to be combined with a pressure increase unit for the application described by the present invention. Optionally, a conditioner is added to prevent the build of carbon dioxide snow, which is not desirable for a laser cutting assist gas in this circumstances.

The bulk tank supply option is used to supply large amounts of laser cutting assist gas, for example supplying to more than one gas assisted laser cutting devices at a time.

The advantages of the present invention are numerous, the following paragraph mentions only a few:
- Improved laser cutting process,
- Reduced gas storage requirements,
- Improved efficiency of cutting gas use, i.e. less waste.

## Claims

1. Method for gas assisted laser cutting of a metal, metal alloy, plastic material, composite, ceramic or wooden workpiece with laser light of a wavelength between 300 nm and 2500 nm, utilising an assist gas essentially consisting of carbon dioxide.

2. Method according to claim 1, wherein the laser light has a wavelength between 500 nm and 1500 nm, preferred between 800 nm and 1200 nm.

3. Method according to any one of the preceding claims, wherein the assist gas is provided at a cutting area of the workpiece by means of a nozzle.

4. Method according to any of the preceding claims, where the provided assist gas is taken from one or more single gas cylinders and/or connected gas cylinders and/or gas cylinder bundles.

5. Method according to any of the preceding claims, where carbon dioxide as assist gas is taken from a single gas cylinder and/or connected gas cylinders and/or a gas cylinder bundle having modified outlet provisions compared to a standard gas cylinder used for the storage and supply of carbon dioxide, where no dip tube is provided inside the gas cylinder(s).

6. Assist gas for gas assisted laser cutting using a laser light with a wavelength between 300 nm and 2500 nm, essentially consisting of carbon dioxide.

7. Assist gas supply system comprising said one or more single gas cylinders and/or connected gas cylinders and/or gas cylinder bundles, each comprising several gas cylinders bundled together, and/or comprising one or more bulk tank(s), used for supplying the assist gas to a gas assisted laser cutting device able to perform the laser cutting method according to any of claims 1 to 6, whereby the cylinder(s) or bulk tank(s) do not comprise a dip tube known for being used for taking out a liquid.
